# EUROPEAN PATENT SPECIFICATION

(11) **EP 3 010 071 B1**
(45) Date of publication and mention of the grant of the patent: **29.08.2018**
(21) Application number: 15195851.9
(22) Date of filing: 16.03.2009
(51) Int. Cl.: H01M 2/10, A47L 9/00, A47L 9/28

(54) **REMOVABLE BATTERY PACK WITH LATCHING MECHANISM**
ENTNEHMBARE BATTERIEPACKUNG MIT VERRIEGEUNGSMECHANISMUS
BLOC DE BATTERIE AMOVIBLE AVEC MÉCANISME DE VERROUILLAGE

(30) Priority: 14.03.2008 US 36732 P
(43) Date of publication of application: 20.04.2016
(62) Divisional of application: 09720389.7
(73) Proprietor: Royal Appliance Mfg. Co., Glenwillow, OH 44139 (US)
(72) Inventor: GEE, Jack W., II, Wiloughby, OH 44094 (US); BUTTS, Mark, Atlanta, Georgia 30316 (US); HORVATH, Jamie, Twinsburg, OH 44087 (US); RUKAVINA, Doug, Massillon, OH 44646 (US)
(74) Representative: Stott, James Edward

(56) References cited:
- DE-B3-102005 010 124
- JP-A- H05 192 270
- TW-U- M 325 658
- US-A- 5 535 437
- US-A1- 2007 243 458

## Description

The present disclosure generally relates to removable battery packs, and more particularly to a removable battery pack having an improved latching mechanism. In particular to one embodiment, a battery pack having an improved latching mechanism is removably disposed in a cleaning appliance with a suction motor impeller assembly (e.g., a stick-type or hand held portable type vacuum cleaner) for powering same. Though the present disclosure will describe a removable battery pack particularly in association with a suction force cleaner, it is to be appreciated that the subject matter described herein has broader applications and may be advantageously employed in related environments and applications (e.g., for use in other powered devices including power tools, radios, power sprayers and the like).

### TECHNICAL CONSIDERATIONS

Removable battery packs have been provided in a wide variety of configurations for use with an infinite number of consumer products. As might be expected, there are many different types of battery latching mechanisms for securing removable battery packs to their respective electric powered devices. At least some of these are claimed to allow for easy removal and installation of the battery packs. These are often competing considerations in the design of a particular battery pack and/or a particular powered device that receives and is powered by the battery pack. A further competing consideration is the constant desire to provide battery packs, and devices powered thereby, at a lower cost without degrading the experience of the consumer in using the battery pack together with its powered device (or devices).

Much attention has been given to the design of removable battery packs for certain categories of consumer products. For example, the art is crowded with many removable battery pack designs and configurations for power tools (e.g., cordless drills and saws). One example is disclosed in document US2007/243458 disclosing a holding means having a flexion spring contained within a base body of a battery pack for an electrical appliance. Similarly, much attention has been given to removable battery packs for more sophisticated electronic devices, such as computers, portable DVD players and the like. However, relatively little attention has been paid to the removable battery packs for other types of more common consumer devices, such as suction force cleaners having a suction motor and impeller or fan assembly commonly referred to as vacuum cleaners. For Instead, for example, latching mechanisms for these other types of consumer devices seem to have been more of an afterthought. Often, for these devices, little attention is given to designing a battery pack latching mechanism that provides proper securing of the battery pack to the consumer device it is to power, while ensuring that the battery pack is easily attached and detached from its consumer device.

### SUMMARY

According to one aspect of the present disclosure, a removable battery package or pack is provided. More particularly, in accordance with this aspect, the removable battery pack includes a housing and one or more batteries disposed within the housing and electrically connected to an electrical connector. A user contact is movably mounted in the housing for movable cooperation with the rod. Suitably a lever can be pivotally mounted to the housing or a push button or twist lever can be movably mounted to the housing. A rod such as a push rod is movably mounted to the housing. The push rod is adapted to be axially moved by the user contact. An engagement member such as a latch is movably mounted to the housing. The member is adapted to be moved between a latched position and an unlatched position by the push rod, when the push rod is axially moved by the lever or push button or twisted axially by a twist lever. If desired, the latch can be urged by a biasing element toward the latched position and can require axial movement by the push rod to force the latch toward the unlatched position, overcoming the urging of the biasing mechanism.

In one configuration, axial movement of the push rod can occur along a first axis and movement of the latch between the latched position and the unlatched position can occur along a second axis. In one embodiment, the second axis can be oriented approximately normal relative to the first axis. If desired, a tapered engagement can be provided between the push rod and the latch to translate movement of the push rod along the first axis to movement of the latch along the second axis.

In one embodiment, the push rod can be movable between a first or retracted position and a second or protruding position. Movement of the push rod from the first retracted position to the second protruding position can move the latch from the latched position to the unlatched position, In the second protruding position, the push rod can extend from the housing for ejecting the housing from an associated device in which the housing is received for powering thereof. If desired, the push rod can be urged toward the first retracted position by a biasing element. Also, if desired, the associated device from which the push rod can eject the housing can be a vacuum cleaner and the one of more batteries contained in the housing can be used to power the vacuum cleaner.

In any of the foregoing configurations or a separate configuration, a distal end of the lever relative to a pivotal connection of the lever to the housing can be pulled to drive the push rod axially downward to move the latch from the latched position inward into the housing to the unlatched position.

According to another aspect of the disclosure, a vacuum cleaner having a removable battery pack is provided. More particularly, in accordance with this aspect, the vacuum cleaner includes a housing having a suction inlet. A suction source is disposed within the vacuum cleaner housing for creating a suction source at the suction inlet. A battery pack housing is removably mounted within the vacuum cleaner housing. One or more batteries are disposed within the battery pack housing for powering the suction source. A latching mechanism includes a lever pivotally mounted to the battery pack housing, a push rod movably mounted to the battery pack housing so as to be axially movable by the lever, and a latch urged to a latched position wherein the latch locks the battery pack to the vacuum cleaner housing. An engagement between the push rod and the latch causes the latch to move to an unlatched position from the latched position when the push rod is sufficiently axially moved by the lever.

In one configuration, a full stroke of the lever can cause the push rod to move the latch to the unlatched position and to protrude from the battery pack housing to eject the battery pack housing from the vacuum cleaner housing.

According to still another aspect of the disclosure, a removable battery pack for a powered device is provided. More particularly, in accordance with this aspect, the removable battery pack includes a battery pack housing removably mounted within the powered device for providing power thereto. A latching mechanism includes a lever pivotally mounted to the battery pack housing. A push rod is movably mounted to the battery pack housing so as to be axially movable from a first position to a second position upon stroking of the lever. A latch locks the battery pack within the powered device when in a latched position. The latch is movable from the latched position to an unlatched position allowing the battery pack housing to be removed from the powered device upon the push rod being moved axially from the first position to the second position.

In one configuration, the push rod, when in the second position, can protrude from the battery pack housing. In this configuration, movement of the push rod from the first position to the second position helps to eject the battery pack from the powered device.

According to still yet another aspect of the instant disclosure, a method for removing a battery pack from a powered device is provided. More particularly, in accordance with this aspect, a lever that is pivotally mounted on the battery pack is pulled or stroked. A push rod that is slidably disposed on the battery pack is axially advanced. Due to a mechanical linkage between the lever and the push rod, pulling of the lever causes axial advancement of the push rod. A latch that is slidably disposed on the battery pack is retracted to release the battery pack from the powered device. Specifically, due to a mechanical arrangement between the latch and the push rod, advancing of the push rod causes retraction of the latch. In one configuration, an ejection of the battery pack from the powered device is assisted by the push rod protruding from the battery pack upon axial advancement thereof.

### BRIEF DESCRIPTION OF THE DRAWINGS

FIGURE 1A is a perspective view of a removable battery pack having a release lever, the release lever shown in an actuated or pulled position.
FIGURE 1B is another perspective view of the removable battery pack of FIGURE 1 showing a latch in a retracted or unlatched position and a push rod in an extended or protruding position.
FIGURE 2 is a perspective view of the removable battery pack seated on a recharging base.
FIGURE 3A is a perspective view of a vacuum cleaner having a receptacle for receipt of the battery pack.
FIGURE 3B is a front view of a vacuum cleaner having a battery pack removably disposed in the receptacle for powering the vacuum cleaner.
FIGURE 4 is a side elevation schematic view of the battery pack.
FIGURE 5 is an end elevation schematic view of the battery pack.
FIGURE 6 is an enlarged partial cross-section view of the battery pack shown in Figure 5 showing an interface between a spring-biased push rod and a spring-biased latch.
FIGURE 7A is an underside perspective view of the removable battery pack showing the latch in a locking or latched position and the push rod in a retracted position.
FIGURE 7B is partial underside perspective view of the removable battery pack showing the latch in the retracted position and the push rod in the protruding position.
FIGURE 8A is a perspective view of the battery pack shown with a first cover removed to illustrate the longitudinal extent of the push rod and the batteries carried within the battery pack.
FIGURE 8B is another perspective view of the battery pack shown with a second, opposite cover removed, the first and second covers together forming a housing of the battery pack.
FIGURE 9A is an enlarged partial perspective view of the battery pack shown with the first cover removed to illustrate the lever in a normal resting position and the push rod in the retracted position.
FIGURE 9B is another partial perspective view of the battery pack shown with the first cover removed to illustrate the lever in the pulled position, which causes the push rod to be in the protruding position.
FIGURE 10 is a perspective view of a hand held portable suction cleaner with the removable battery in the battery receiving opening and well.
FIGURE 11 is a rear view of the hand held portable suction cleaner of Figure 10 with the removable battery in the battery receiving opening and well.

### DETAILED DESCRIPTION

In the description unless otherwise indicated, all numbers expressing quantities of dimensions, physical characteristics, and so forth used in the specification and claims are to be understood as being modified in all instances by the term "about". Accordingly, unless indicated to the contrary, the numerical values set forth in the following specification and claims may vary depending upon the desired properties sought to be obtained in the present disclosure. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all sub-ranges subsumed therein. For example, a stated range of "1 to 10" should be considered to include any and all sub-ranges-between (and inclusive of) the minimum value of 1 and the maximum value of 10; that is, all sub-ranges beginning with a minimum value of 1 or more and ending with a maximum value of 10 or less, e.g., 5.5 to 10. Also as used herein, spatial or directional terms in regards to the position such as "left", "right", "inner", "outer", "above", "below", "top", "bottom" "over", "on", "side", "front", "back" and the like have their standard dictionary meanings.

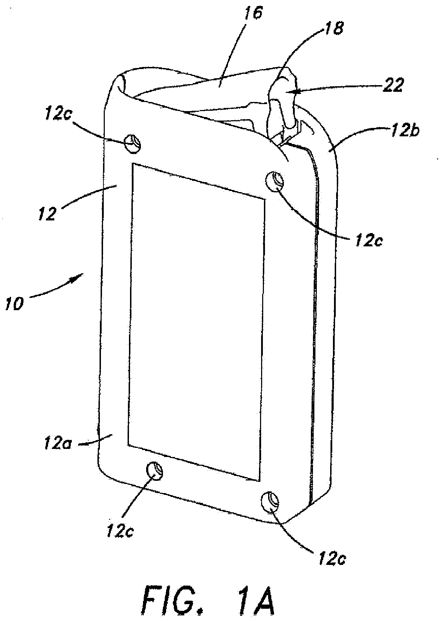

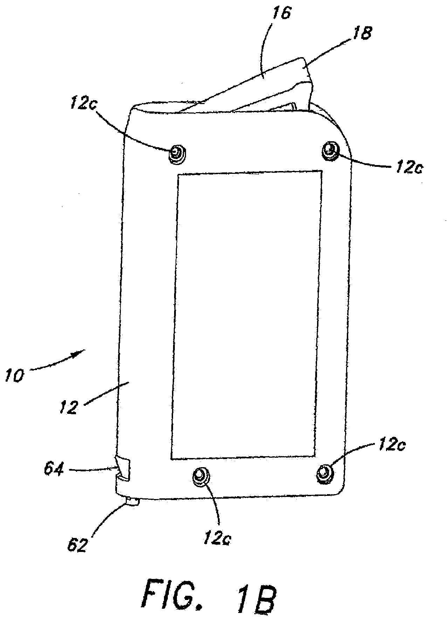

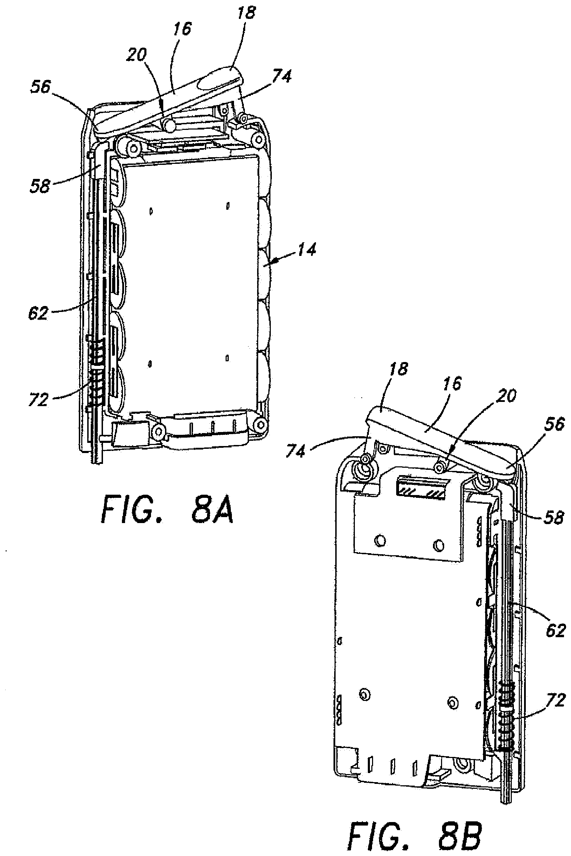

Referring now to the drawings, wherein the showings are for purposes of illustrating one or more exemplary embodiments of the present disclosure, FIGURES 1A and 1B show a removable battery pack 10 for a powered device. The battery pack 10 includes a housing 12 and one or more batteries 14 (FIGURE 8A) disposed within the housing 12. The housing 12 can be formed of a first shell or member 12a and a second shell or member 12b, with the members 12a,12b held together by suitable fasteners 12c (e.g., screws). As will be understood and appreciated by those skilled in the art upon reading the present disclosure, a lever 16 is pivotally mounted to the housing 12 for enabling removal of the battery pack 10 from a powered device in which it is received for powering thereof.

In particular, as will be described in more detail below, a one end 18 of the lever 16, which is spaced apart relative to a pivotal connection 20 of the lever 16 to the housing 12 (see FIGURES 8A-9B), is pullable to unlatch the battery pack 10 from a powered device in which it is received and/or to eject the battery pack 10 from the device in which it is received. The lever 16 can have a movement angle about the pivot point 20 of from greater than one degree to less than 180 degrees and more suitably from 5 to less than 90 degrees. As illustrated, the end 18 of the lever 16 can be formed as a raised portion adjacent a recess 22, the raised formation of the end 18 and the recess 22 appropriately sized to receive a user's finger for pivotal lifting of the lever 16, particularly lifting of the end 18 thereof.

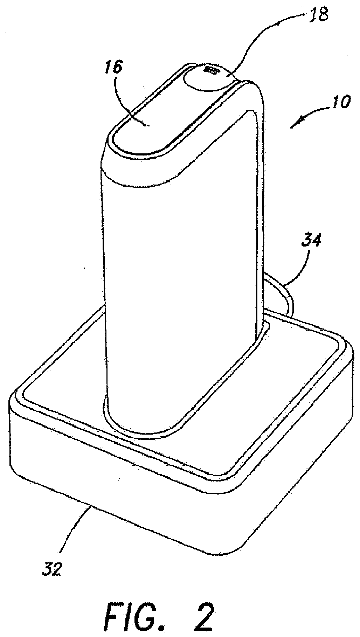

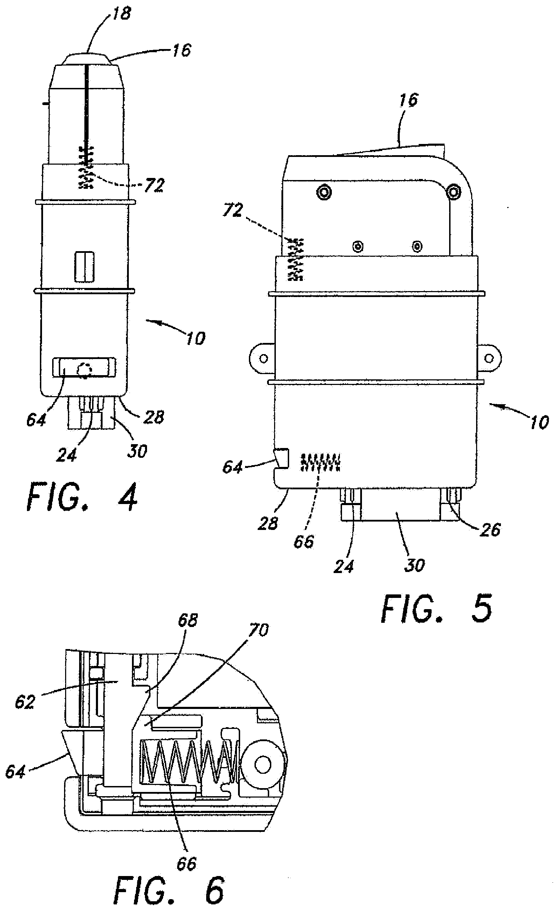

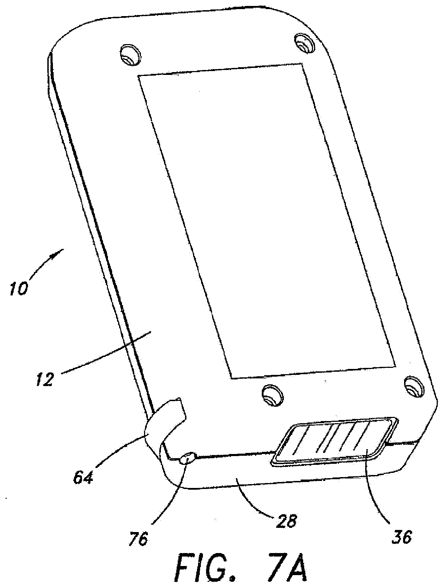

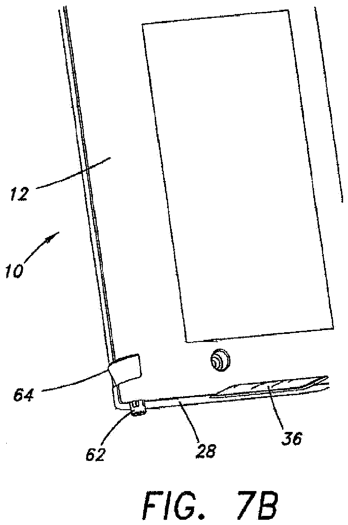

As is known and understood by those skilled in the art, the battery pack 10 can include appropriate positive and negative terminal connections for electrically connecting the battery pack 10, and specifically the one or more batteries 14 thereof, to suitable electrical components of a powered device. In one arrangement, as illustrated in FIGURES 4 and 5, the electrical connections 24, 26 can extend from a bottom side 28 of the battery pack housing 12 and be provided adjacent a supporting structure 30 of the housing 12 for providing structural protection to the terminal connections 24, 26. Alternatively, as shown in FIGURES 7A and 7B, the terminal electrical connections can be provided through an interface 36 that is slightly recessed within the housing 12 and thereby structurally protected or supported. With reference to FIGURE 2, the removable battery pack 10 can be received on a charging base 32 for recharging of the one or more batteries 14 of the battery pack 10. The recharging base 32 can be constructed as is well known by those of skill in the art so as to receive electrical power through a conventional power cord 34 and convert the same into appropriate DC power to be received and stored by the one or more batteries 14 for subsequent powering of a powered device.

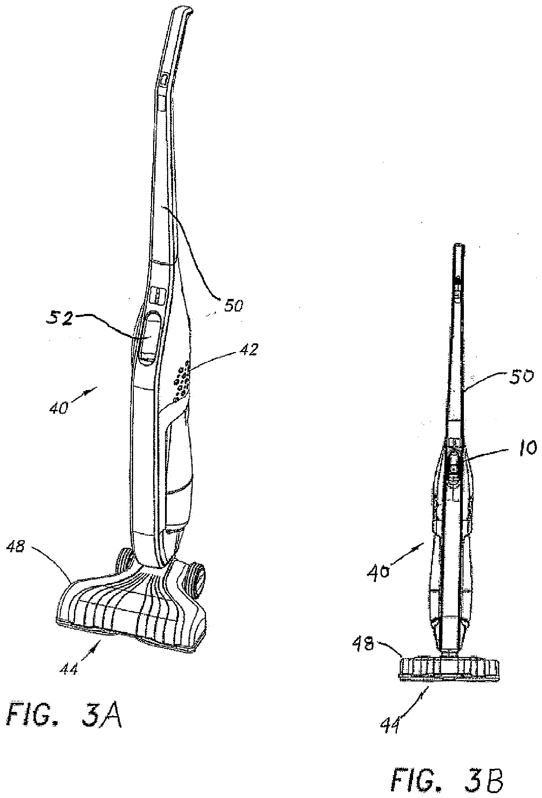

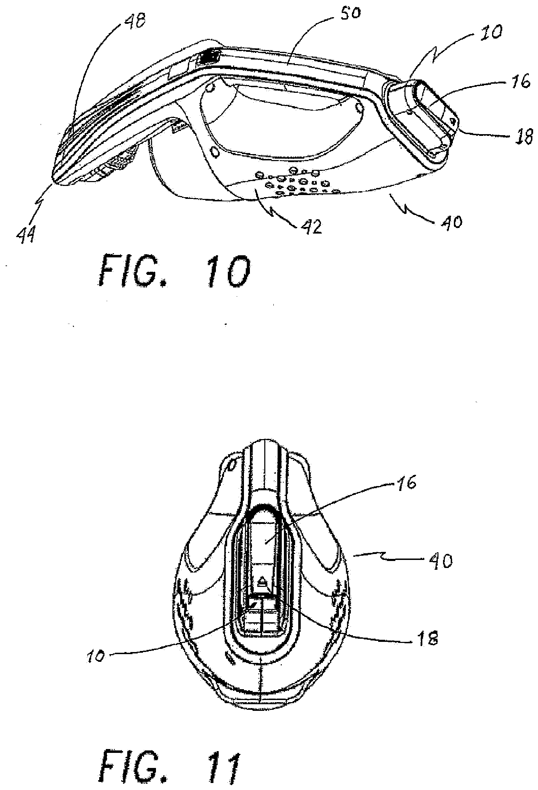

The removable battery pack 10 can be used with a variety of powering devices configured to receive the battery pack 10 and receive power therefrom. For example, with reference to FIGURES 3A, 3B, 10 and 11, the battery pack 10 can be used in association with a powered device, such as an electrically powered cleaning device such as a vacuum cleaner 40. As is conventional, the vacuum cleaner 40 includes a vacuum cleaner housing 42 having a suction inlet 44. A suction source (not shown) is disposed within the vacuum cleaner housing 42 for creating a vacuum at the suction inlet 44, as is known and understood by those skilled in the art. The vacuum cleaner 40 of the illustrated embodiment of FIGURES 3A and 3B for a stick-type vacuum cleaner wherein the housing 42 includes a nozzle base portion 48 disposed at a lower end, pivotally connected to an elongated handle portion 50. The nozzle portion 48 includes the suction inlet 44 defined therein and the handle portion 50 can house the motor/fan assembly forming the suction source. For a hand held vacuum cleaner as shown in FIGURES 10 and 11 the handle 50 is integrated into the unit but the nozzle 48 with nozzle inlet 44, suction fan assembly and removable battery 10 can be arranged in the body or housing 42.

The battery pack 10 can be removably mounted to or within the vacuum cleaner 40. In other words the battery pack 10 can be mounted either in the nozzle base 48 or in the handle portion 50. The mounting in FIGURE 3A can be in the opening and well 52 as shown in FIGURE 3B. The one or more batteries 14 disposed within the battery pack housing 12 can be used for powering the suction source of the vacuum cleaner 40. When the one or more batteries 14 have lost some or all of their charge, the battery pack 10 can be removed from the vacuum cleaner 40 and mounted on the recharging base 32 for recharging of the one or more batteries 14.

With reference now to FIGURES 4-9B, the battery pack 10 can include a latching mechanism comprised of the lever 16 pivotally mounted to the battery pack housing 12, a push rod 62 movably mounted to the battery pack housing 12 and a latch 64 movably mounted to the battery pack housing 12. As will be described in more detail below, the push rod 62 is adapted to be axially moved by the lever 16 and the latch 64 is adapted to be moved radially from a latched position to an unlatched position by the push rod 62 when the push rod is axially moved by the lever 16. In the latched position, the latch 64 can lock the battery pack 10 within its power device (e.g., vacuum cleaner 40).

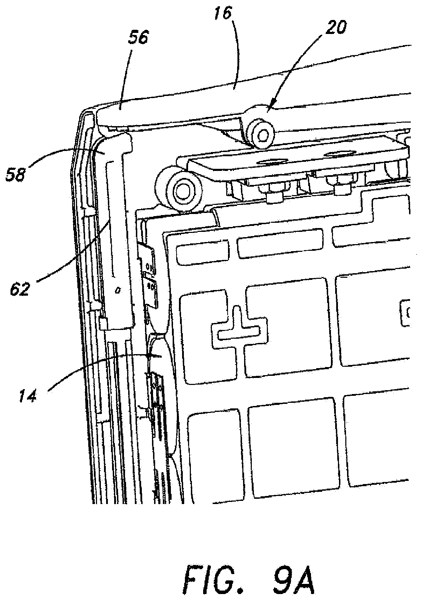

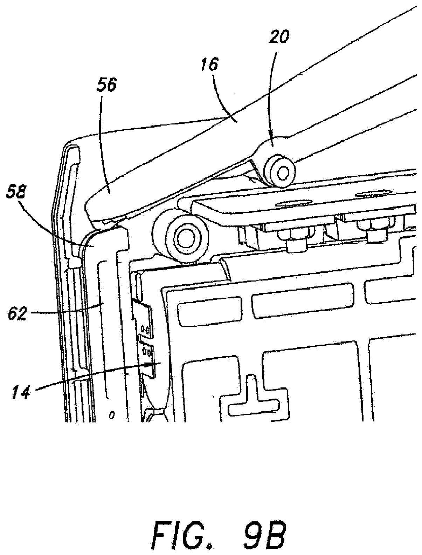

The latch 64 is movable from its latched position (FIG. 9A) to its unlatched position (FIG. 9B) allowing the battery pack housing 12 to be removed from its powered device, when the push rod 62 is moved axially from a first position to a second position. In particular, the push rod 62 is movable from its first position to its second position upon stroking of the lever 16 (i.e., fully lifting the end 18 of the lever 16.) With specific reference to FIGURES 9A and 9B, lifting end 18 of the lever 16 causes the lever 16 to pivot about pivotal connection' 20. This, in turn, causes lever end 56 to point downwardly, contacting the upper end 58 of the push rod 62 and thereby driving the push rod axially downwardly. In one embodiment (FIGS. 8A,8B) the lever 16 can include legs 74 depending from the end 18. The legs 74 cooperate with the housing 12 to limit the stroke of the lever 16.

As best shown in FIGURE 6, the latch 64 can be urged to its latched position wherein the latch 64 locks the battery pack 10 within its power device (e.g., to the vacuum cleaner 40 or vacuum cleaner housing 42). Specifically, the latch 64 is urged by a biasing element, such as spring 66, toward the latched position. Axial movement of the push rod 62, however, can force the latch 64 toward its unlatched position by overcoming the urging of the biasing element 66. In particular, an engagement between the push rod 62 and the latch 64 can cause the latch 64 to move to the unlatched position (shown in FIGURE 7B) from the latched position (shown in FIGURE 7A) when the push rod 62 is sufficiently axially moved (i.e., fully stroked) by the lever 16.

As shown in the illustrated embodiments, axial movement of the push rod 62 occurs along a first axis and movement of the latch 64 between the latched position and the unlatched position occurs along a second axis. The second axis can be oriented approximately normal relative to the first axis. As best shown in FIGURE 6, the engagement between the push rod 62 and the latch 64 can be a tapered engagement which translates movement of the push rod 62 along the first axis to movement of the latch 64 along the second axis. To create this tapered engagement, the push rod 62 can include a tapered portion 68 that engages a cooperating tapered portion 70 of the latch 64 upon axial movement of the push rod 62 to thereby move the latch 64 from its latched position to the unlatched position.

The first position of the push rod 62 (shown in FIGURES 7A and 9A) can be referred to as a retracted position and the second position of the push rod 62 (shown in FIGURES 7B and 9B) can be referred to as a protruding position. Thus, the push rod 62 is movable between a first retracted position and a second protruding position. In the first retracted position, the push rod 62 is retracted within the housing 12 (i.e., it does not protrude from the housing 12). In the second protruding position, the push rod 62 extends from the battery pack housing 12 through aperture 76 defined in the underside 28 of the housing 12 for ejecting the housing 12 from an associated device in which the housing is received for powering thereof. Also, as already mentioned, movement of the push rod 62 from the first retracted position to the second protruding position moves the latch 64 from the latched position to the unlatched position.

The push rod 62 can be urged toward its first retracted position by a biasing element, such as the illustrated spring 72 (only schematically illustrated in FIGURES 4 and 5). Thus, when the end 18 of the lever 16 is pulled, the push rod 62 is driven axially downward to move the latch 64, against the bias of the spring, from its latched position inward into the housing 12 to its unlatched position. More specifically, a full stroke of the lever 16 causes the push rod 62 to move the latch 64 to the unlatched position and further causes the push rod 62 to protrude from the battery pack housing 12, which can be used to assist in the ejection of the battery
pack housing 12 from the housing of the powered device in which the battery pack is received (e.g., vacuum cleaner housing 42).

By the foregoing arrangement, a method for removing a battery pack from a powered device can be described. First, the lever 16 that is pivotally mounted on the battery pack 10 can be pulled. Pulling up one end of the lever 16 causes the other end to push down on the push rod 62, causing it to axially advance. Such axial advancement occurs as a result of the push rod 62 being slidably disposed on the battery pack 10 and mechanically arranged such that a rotating movement of the lever 16 is translated into axial movement of the push rod 62. The advancing of the push rod 62, as already described, causes the latch 64 to retract. Retraction of the latch 64 results from the latch being slidably disposed on the battery pack 10 and the tapered engagement between the push rod 62 and the latch 64. In the unlatched position, the latch 64 allows the battery pack 10 to be removed from its powered device. The battery pack 10 can also be ejected from its powered device via the push rod 62 protruding from the battery pack 10 upon axial advancement thereof.

Although in the illustrated embodiment, only a single latch 64 is illustrated, it will be appreciated by those with skill in the art that any number of latches 64 can be provided along the push rod 62 and within the housing 12 of the battery pack such that axial movement of the push rod 62 could slidably move any number of latches from respective latched positions to unlatched positions upon sufficient axial movement of the push rod. Also, it should be appreciated that installation of the battery pack 10 into a powered device can operate to force the one or more latches (e.g., latch 64) inward against their respective biasing elements allowing the battery pack to be removably secured to a powered device. The configuration of the device and/or the latches can then allow the latches to be returned to their latched positions by the biasing mechanism when the battery pack is fully installed.

## Claims

1. A battery pack (10) configured to supply power to a cleaning device (40) and be received by a battery receptacle of the cleaning device, the battery pack comprising:
a housing (12) including an aperture (76);
a user contact (16) moveable between a first position and a second position;
a rod (62) that interfaces with the user contact (16) such that when the user contact moves from the first position toward the second position the rod moves from a retracted position, in which the rod is retracted into the housing (12), to a protruded position, in which a portion of the rod extends through the aperture (76) of the housing (12),;
an engagement member (64) that interfaces with the rod (62) such that when the rod moves from the retracted position toward the protruded position the engagement member moves from a latched position to an unlatched position; and
wherein, when the rod (62) is in the protruded position said portion of the rod extends through the aperture (76) of the housing (12) to eject the battery pack (10) from the battery receptacle.

2. The battery pack of claim 1, wherein:
the user contact (16) is located on a first side of the housing and the engagement member (64) is located on a second side of the housing, the second side opposite the first side.

3. The battery pack of claim 1 or 2, further comprising a biasing member (66) that biases the engagement member (64) toward the latched position.

4. The battery pack of any preceding claim, wherein the portion of the rod (62) does not extend through the aperture (76) of the housing (12) until the engagement member (64) moves to the unlatched position.

5. The battery pack according to any preceding claim comprising:
a battery (14) within the housing (12);
an electrical connection (24; 26; 36) configured to electrically connect the battery to the cleaning device;
the user contact (16) being movable relative to the housing (12) from the first position to the second position;
wherein in the latched position, the engagement member (64) extends from the housing (12) and is configured to secure the battery pack (10) to the battery receptacle of the cleaning device (40);
and
wherein in the unlatched position, the engagement member (64) is at least partially retracted into the housing (12) and the battery pack (10) is removable from the battery receptacle.

6. The battery pack of any preceding claim, wherein in the latched position the engagement member (64) is configured to engage the battery receptacle to secure the battery pack (10) to the cleaning device (40).

7. The battery pack of any preceding claim, wherein the engagement member (64) is fully retracted into the housing (12) in the unlatched position.

8. The battery pack of any preceding claim, wherein the housing (12) includes a first side and a second side opposite the first side, wherein the user contact (16) is located on a first side of the housing and the aperture (76) extends through the second side of the housing; and
wherein optionally the housing includes a third side that extends from the first side to the second side, wherein the rod (62) extends along the third side of the housing.

9. The battery pack of any preceding claim, wherein the rod (62) has a tapered engagement section (68) to translate movement of the rod (62) along a first axis to movement of the engagement member (64) along a second axis; and
wherein optionally the first axis is substantially normal to the second axis.

10. The battery pack of any preceding claim, further comprising a biasing member (72) that biases the rod (62) toward the retracted position.

11. The battery pack of any preceding claim, wherein the user contact includes a lever (16).

12. The battery pack of claim 11, wherein the lever (16) is pivotably mounted to the housing (12).

13. The battery pack of claim 12, wherein the lever includes a first end (18), a second end (56), and a pivot point (20) between the first and second ends that pivotally couples the lever to the housing (12), and wherein the second end (56) of the lever (16) contacts the rod (62) to move the rod to the extended position in response to movement of the user contact from the first position to the second position.

14. The battery pack of any preceding claim, wherein the engagement member includes a latch (64).

15. The battery pack of any preceding claim, wherein the rod comprises a push rod (62).

## Patentansprüche

1. Batteriepackung (10), die dafür konfiguriert ist, eine Reinigungsvorrichtung (40) mit Strom zu speisen und durch eine Batterieaufhahme der Reinigungsvorrichtung aufgenommen zu werden, wobei die Batteriepackung Folgendes umfasst:
ein Gehäuse (12), das eine Öffnung (76) einschließt,
einen Benutzerkontakt (16), der zwischen einer ersten Position und einer zweiten Position beweglich ist,
einen Stab (62), der sich derart mit dem Benutzerkontakt (16) verbindet, dass, wenn sich der Benutzerkontakt von der ersten Position zu der zweiten Position hin bewegt, sich der Stab von einer zurückgezogenen Position, in welcher der Stab in das Gehäuse (12) zurückgezogen ist, zu einer vorstehenden Position, in der sich ein Abschnitt des Stabs durch die Öffnung (76) des Gehäuses (12) erstreckt, bewegt,
ein Eingriffselement (64), das sich derart mit dem Stab (62) verbindet, dass, wenn sich der Stab von der zurückgezogenen Position zu der vorstehenden Position hin bewegt, sich das Eingriffselement von einer verriegelten Position zu einer unverriegelten Position bewegt, und
wobei, wenn sich der Stab (62) in der vorstehenden Position befindet, sich der Abschnitt des Stabs durch die Öffnung (76) des Gehäuses (12) erstreckt, um die Batteriepackung (10) aus der Batterieaufnahme auszustoßen.

2. Batteriepackung nach Anspruch 1, wobei:
der Benutzerkontakt (16) auf einer ersten Seite des Gehäuses angeordnet ist und das Eingriffselement (64) auf einer zweiten Seite des Gehäuses angeordnet ist, wobei die zweite Seite der ersten Seite gegenüberliegt.

3. Batteriepackung nach Anspruch 1 oder 2, die ferner ein Vorspannelement (66) umfasst, welches das Eingriffselement (64) zu der verriegelten Position hin vorspannt.

4. Batteriepackung nach einem der vorhergehenden Ansprüche, wobei sich der Abschnitt des Stabs (62) nicht durch die Öffnung (76) des Gehäuses (12) erstreckt, bis sich das Eingriffselement (64) zu der unverriegelten Position bewegt.

5. Batteriepackung nach einem der vorhergehenden Ansprüche, die Folgendes umfasst:
eine Batterie (14) innerhalb des Gehäuses (12),
eine elektrische Verbindung (24; 26; 36), die konfiguriert ist, um die Batterie elektrisch mit der Reinigungsvorrichtung zu verbinden,
wobei der Benutzerkontakt (16) im Verhältnis zu dem Gehäuse (12) von der ersten Position zu der zweiten Position beweglich ist,
wobei in der verriegelten Position sich das Eingriffselement (64) von dem Gehäuse (12) erstreckt und konfiguriert ist, um die Batteriepackung (10) an der Batterieaufnahme der Reinigungsvorrichtung (40) zu sichern,
und
wobei in der unverriegelten Position das Eingriffselement (64) wenigstens teilweise in das Gehäuse (12) zurückgezogen ist und die Batteriepackung (10) aus der Batterieaufnahme entfernbar ist.

6. Batteriepackung nach einem der vorhergehenden Ansprüche, wobei in der verriegelten Position das Eingriffselement (64) konfiguriert ist, um die Batterieaufnahme in Eingriff zu nehmen, um die Batteriepackung (10) an der Reinigungsvorrichtung (40) zu sichern.

7. Batteriepackung nach einem der vorhergehenden Ansprüche, wobei das Eingriffselement (64) in der unverriegelten Position vollständig in das Gehäuse (12) zurückgezogen ist.

8. Batteriepackung nach einem der vorhergehenden Ansprüche, wobei das Gehäuse (12) eine erste Seite und eine zweite Seite, die der ersten Seite gegenüberliegt, einschließt, wobei der Benutzerkontakt (16) auf einer ersten Seite des Gehäuses angeordnet ist und sich die Öffnung (76) durch die zweite Seite des Gehäuses erstreckt und
wobei wahlweise das Gehäuse eine dritte Seite einschließt, die sich von der ersten zu der zweiten Seite erstreckt, wobei sich der Stab (62) entlang der dritten Seite des Gehäuses erstreckt.

9. Batteriepackung nach einem der vorhergehenden Ansprüche, wobei der Stab (62) einen kegeligen Eingriffsabschnitt (68) aufweist, um eine Bewegung des Stabs (62) entlang einer ersten Achse in einer Bewegung des Eingriffselements (64) entlang einer zweiten Achse umzusetzen, und
wobei wahlweise die erste Achse im Wesentlichen senkrecht zu der zweiten Achse ist.

10. Batteriepackung nach einem der vorhergehenden Ansprüche, die ferner ein Vorspannelement (72) umfasst, das den Stab (62) zu der zurückgezogenen Position hin vorspannt.

11. Batteriepackung nach einem der vorhergehenden Ansprüche, wobei der Benutzerkontakt einen Hebel (16) einschließt.

12. Batteriepackung nach Anspruch 11, wobei der Hebel (16) schwenkbar an dem Gehäuse (12) angebracht ist.

13. Batteriepackung nach Anspruch 12, wobei der Hebel ein erstes Ende (18), ein zweites Ende (56) und einen Schwenkpunkt (20) zwischen dem ersten und dem zweiten Ende, der den Hebel schwenkbar mit dem Gehäuse (12) verbindet, einschließt und wobei das zweite Ende (56) des Hebels (16) den Stab (62) berührt, um als Reaktion auf eine Bewegung des Benutzerkontakts von der ersten Position zu der zweiten Position den Stab zu der ausgefahrenen Position zu bewegen.

14. Batteriepackung nach einem der vorhergehenden Ansprüche, wobei das Eingriffselement einen Riegel (64) einschließt.

15. Batteriepackung nach einem der vorhergehenden Ansprüche, wobei der Stab einen Schubstab (62) einschließt.

## Revendications

1. Bloc-batteries (10) configuré de manière à ce qu'il alimente un dispositif de nettoyage (40) et à ce qu'il soit reçu par un réceptacle de batterie du dispositif de nettoyage, le bloc-batteries comprenant :
un logement (12) qui inclut une ouverture (76) ;
un contact utilisateur (16) qui peut être déplacé entre une première position et une seconde position ;
une tige (62) qui réalise un interfaçage avec le contact utilisateur (16) de telle sorte que lorsque le contact utilisateur est déplacé depuis la première position vers la seconde position, la tige se déplace depuis une position rétractée, dans laquelle la tige est rétractée à l'intérieur du logement (12), jusqu'à une position en saillie, dans laquelle une partie de la tige s'étend au travers de l'ouverture (76) du logement (12) ;
un élément d'engagement (64) qui réalise un interfaçage avec la tige (62) de telle sorte que lorsque la tige est déplacée depuis la position rétractée vers la position en saillie, l'élément d'engagement se déplace depuis une position verrouillée jusqu'à une position déverrouillée ; et dans lequel :
lorsque la tige (62) est dans la position en saillie, ladite partie de la tige s'étend au travers de l'ouverture (76) du logement (12) de manière à ce qu'elle éjecte le bloc-batteries (10) hors du réceptacle de batterie.

2. Bloc-batteries selon la revendication 1, dans lequel :
le contact utilisateur (16) est agencé sur un premier côté du logement et l'élément d'engagement (64) est agencé sur un deuxième côté du logement, le deuxième côté étant opposé au premier côté.

3. Bloc-batteries selon les revendications 1 ou 2, comprenant en outre un élément poussoir (66) qui pousse l'élément d'engagement (64) vers la position verrouillée.

4. Bloc-batteries selon l'une quelconque des revendications qui précèdent, dans lequel la partie de la tige (62) ne s'étend pas au travers de l'ouverture (76) du logement (12) jusqu'à ce que l'élément d'engagement (64) se déplace dans la position déverrouillée.

5. Bloc-batteries selon l'une quelconque des revendications qui précèdent, comprenant :
une batterie (14) à l'intérieur du logement (12) ;
une connexion électrique (24 ; 26 ; 36) qui est configurée de manière à ce qu'elle connecte électriquement la batterie au dispositif de nettoyage ;
le contact utilisateur (16) pouvant être déplacé par rapport au logement (12) depuis la première position jusqu'à la seconde position ; dans lequel :
dans la position verrouillée, l'élément d'engagement (64) s'étend depuis le logement (12) et il est configuré de manière à ce qu'il fixe le bloc-batteries (10) sur le réceptacle de batterie du dispositif de nettoyage (40) ; et dans lequel :
dans la position déverrouillée, l'élément d'engagement (64) est au moins partiellement rétracté à l'intérieur du logement (12) et le bloc-batteries (10) peut être retiré hors du réceptacle de batterie.

6. Bloc-batteries selon l'une quelconque des revendications qui précèdent, dans lequel, dans la position verrouillée, l'élément d'engagement (64) est configuré de manière à ce qu'il engage le réceptacle de batterie de manière à fixer le réceptacle de batterie (10) sur le dispositif de nettoyage (40).

7. Bloc-batteries selon l'une quelconque des revendications qui précèdent, dans lequel l'élément d'engagement (64) est complètement rétracté à l'intérieur du logement (12) dans la position déverrouillée.

8. Bloc-batteries selon l'une quelconque des revendications qui précèdent, dans lequel :
le logement (12) inclut un premier côté et un deuxième côté qui est opposé au premier côté, dans lequel le contact utilisateur (16) est agencé sur un premier côté du logement et l'ouverture (76) s'étend au travers du deuxième côté du logement ; et dans lequel :
en option, le logement inclut un troisième côté qui s'étend depuis le premier côté jusqu'au deuxième côté, dans lequel la tige (62) s'étend le long du troisième côté du logement.

9. Bloc-batteries selon l'une quelconque des revendications qui précèdent, dans lequel :
la tige (62) comporte une section d'engagement effilée (68) pour convertir le déplacement de la tige (62) le long d'un premier axe selon un déplacement de l'élément d'engagement (64) le long d'un second axe ; et dans lequel :
en option, le premier axe est sensiblement normal au second axe.

10. Bloc-batteries selon l'une quelconque des revendications qui précèdent, comprenant en outre un élément poussoir (72) qui pousse la tige (62) vers la position rétractée.

11. Bloc-batteries selon l'une quelconque des revendications qui précèdent, dans lequel le contact utilisateur inclut un levier (16).

12. Bloc-batteries selon la revendication 11, dans lequel le levier (16) est monté de manière pivotante sur le logement (12).

13. Bloc-batteries selon la revendication 12, dans lequel le levier inclut une première extrémité (18), une seconde extrémité (56) et un point de pivotement (20) entre les première et seconde extrémités qui couple de manière pivotante le levier avec le logement (12), et dans lequel la seconde extrémité (56) du levier (16) entre en contact avec la tige (62) de manière à déplacer la tige jusqu'à la position étendue en réponse à un déplacement du contact utilisateur depuis la première position jusqu'à la seconde position.

14. Bloc-batteries selon l'une quelconque des revendications qui précèdent, dans lequel l'élément d'engagement inclut un élément de verrouillage (64).

15. Bloc-batteries selon l'une quelconque des revendications qui précèdent, dans lequel la tige comprend une tige de poussée (62).
